# EUROPEAN PATENT APPLICATION

(11) **EP 4 509 750 A1**
(43) Date of publication of application: **19.02.2025**
(21) Application number: 23790980.9
(22) Date of filing: 23.03.2023
(51) Int. Cl.: F16L 57/00, F16L 57/04, H01M 10/613, H01M 10/6556

(54) **PROTECTIVE SLEEVE, BATTERY THERMAL MANAGEMENT SYSTEM, AND BATTERY**

(30) Priority: 19.04.2022 CN 202220901783 U
(71) Applicant: Contemporary Amperex Technology Co., Limited, Ningde, Fujian 352100 (CN)
(72) Inventor: LIAO, Boxiang, Ningde, Fujian 352100 (CN); ZHOU, Cong, Ningde, Fujian 352100 (CN); SONG, Feiting, Ningde, Fujian 352100 (CN); HUANG, Xiaoteng, Ningde, Fujian 352100 (CN)
(74) Representative: Gong, Jinping
(86) International application number: PCT/CN2023/083417
(87) International publication number: WO 2023/202320

(57) **Abstract**

A protective sleeve (100), a battery thermal management system, and a battery are provided. The protective sleeve (100) is configured to sleeve a pipeline (300) and includes a sleeve body (110), where the sleeve body (110) includes a first bundling section (111), a first diameter-variable section (112), a protective section (113), a second diameter-variable section (114), and a second bundling section (115) arranged in sequence. Diameters of the first bundling section (111) and the second bundling section (115) are smaller than diameter of the protective section (113), and the first bundling section (111) and the second bundling section (115) are capable of elastically clamping the pipeline (300), so as to fix the protective sleeve (100) to the pipeline (300). This can improve the convenience of installing and removing the protective sleeve (100) on the pipeline (300).

## Description

### CROSS-REFERENCE TO RELATED APPLICATIONS

This application refers to Chinese Patent Application No. 202220901783.0, filed on April 19, 2022 and entitled "PROTECTIVE SLEEVE, BATTERY THERMAL MANAGEMENT SYSTEM, AND BATTERY", which is incorporated herein by reference in its entirety.

### TECHNICAL FIELD

This application relates to the field of pipeline protection technologies, and specifically, to a protective sleeve, a battery thermal management system, and a battery.

### BACKGROUND

In the fields such as batteries, electronics, and mechanical equipment, in some cases, it is necessary to fit protective sleeves around surfaces of pipelines or cables (collectively referred to as pipelines in this application) to meet the protection requirements of pipelines, such as mechanical protection, electromagnetic protection, and fire protection.

How the convenience of installing and removing a protective sleeve on a pipeline is improved is an urgent technical problem to be solved by persons skilled in the art.

### SUMMARY

This application is intended to solve at least one of the technical problems in the prior art. Therefore, one objective of this application is to propose a protective sleeve, a battery thermal management system, and a battery, so as to improve the convenience of installing and removing the protective sleeve on pipelines.

According to one aspect of this application, a protective sleeve is provided, configured to sleeve a pipeline. The protective sleeve includes a sleeve body, where the sleeve body includes a first bundling section, a first diameter-variable section, a protective section, a second diameter-variable section, and a second bundling section arranged in sequence, where diameters of the first bundling section and the second bundling section are smaller than diameter of the protective section, and the first bundling section and the second bundling section are capable of elastically clamping the pipeline, so as to fix the protective sleeve to the pipeline.

In the technical solution of the embodiments of this application, the elasticity of the two bundling sections is utilized to easily implement the installation and removal of the protective sleeve on the pipeline, which is conducive to improving the efficiency of production and assembly.

In some embodiments, the sleeve body is woven from fiber. The sleeve body of this structure features high impact resistance, good flexibility, corrosion resistance, light weight, and durability.

In some embodiments, the first bundling section and the second bundling section are woven from elastic fiber. The two bundling sections have good elasticity, allowing them to be securely clamped to the surface of the pipeline.

In some embodiments, the protective section is woven from inorganic fiber. The protective section features good heat resistance, moisture resistance, fire resistance, and chemical corrosion resistance.

In some embodiments, the first diameter-variable section and the second diameter-variable section are woven from a mixture of elastic fiber and inorganic fiber. The diameter-variable section primarily serves as a structural transition and connection between the bundling section and the protective section.

In some embodiments, the elastic fiber includes at least one of polyester fiber or nylon fiber; and/or the inorganic fiber includes at least one of glass fiber or ceramic fiber. The elastic fiber and the inorganic fiber can be selected with reference to the foregoing materials.

In some embodiments, the protective sleeve further includes a mechanical performance enhancement layer, where the mechanical performance enhancement layer is disposed at least in the first diameter-variable section and the second diameter-variable section. The mechanical performance enhancement layer can effectively improve the wear resistance grade and structural strength of the first diameter-variable section and the second diameter-variable section, reducing material wear and powder loss.

In some embodiments, the mechanical performance enhancement layer is further disposed in the first bundling section, the second bundling section, and the protective section. In this way, the process difficulty can be reduced, which is conducive to reducing production costs.

In some embodiments, the protective sleeve includes a plurality of mechanical performance enhancement layers, where the plurality of mechanical performance enhancement layers are located on an inner side and/or an outer side of the sleeve body. In this way, the wear resistance grade and structural strength of the protective sleeve can be further improved.

In some embodiments, the mechanical performance enhancement layer includes at least one of rubber or resin; and/or the mechanical performance enhancement layer is a coating layer. The mechanical performance enhancement layer can effectively improve the wear resistance grade and structural strength of the first diameter-variable section and the second diameter-variable section, reducing material wear and powder loss.

In some embodiments, the protective sleeve is provided with a fire protection layer on an outer surface. In this way, the fire resistance of the protective sleeve can be further improved, and a certain degree of mechanical protection and fire protection can be provided for the bundling section and the diameter-variable section.

In some embodiments, the fire protection layer includes at least one of fire-resistant mica and ceramicized silicone rubber. This type of material has good fire resistance.

According to one aspect of this application, a battery thermal management system is provided, including a coolant circulation loop and the protective sleeve according to any one of the foregoing embodiments fixed to a pipeline of the coolant circulation loop.

The protective sleeve is configured to provide mechanical protection and fire protection for the pipeline of the coolant circulation loop. The protective sleeve can be conveniently installed to and removed from the pipeline, thus significantly improving the efficiency of battery production and assembly.

According to one aspect of this application, a battery is provided, including the battery thermal management system according to the foregoing embodiment. Since the protective sleeve can be conveniently installed to and removed from the pipeline, the efficiency of battery production and assembly is significantly improved.

In the solutions of the foregoing embodiments of this application, the sleeve body of the protective sleeve includes the first bundling section, the first diameter-variable section, the protective section, the second diameter-variable section, and the second bundling section arranged in sequence. The elasticity of the two bundling sections is utilized to easily implement the installation and removal of the protective sleeve on the pipeline, which is conducive to improving the efficiency of production and assembly.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

### BRIEF DESCRIPTION OF DRAWINGS

In the accompanying drawings, unless otherwise specified, the same reference signs in a plurality of accompanying drawings denote the same or similar components or elements. The accompanying drawings are not necessarily drawn to scale. It should be understood that these accompanying drawings merely describe some embodiments disclosed in this application, and should not be construed as a limitation on the scope of this application. To describe the technical solutions of the embodiments of this application more clearly, the following briefly describes the accompanying drawings required for describing the embodiments of this application. Apparently, the accompanying drawings described below show merely some embodiments of this application, and persons of ordinary skill in the art may still derive other drawings from the accompanying drawings without creative efforts.
FIG. 1 is a schematic diagram of a protective sleeve being installed on a pipeline according to some embodiments of this application;
FIG. 2 is a schematic diagram of a protective sleeve being removed from a pipeline according to some embodiments of this application;
FIG. 3 is a schematic structural diagram of a protective sleeve according to some embodiments of this application; and
FIG. 4 is a schematic structural diagram of a cross section along A-A of FIG. 3.

Reference signs in the accompanying drawings are described as follows:
100. protective sleeve
300. pipeline
110. sleeve body
111. first bundling section
112. first diameter-variable section
113. protective section
114. second diameter-variable section
115. second bundling section
120. mechanical performance enhancement layer
130. fire protection layer

### DESCRIPTION OF EMBODIMENTS

The following describes in detail the embodiments of technical solutions in this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of the embodiments of this application, the terms "first", "second" and the like are merely intended to distinguish between different objects, and shall not be understood as any indication or implication of relative importance or any implicit indication of the number, sequence or primary-secondary relationship of the technical features indicated. In the description of this application, "a plurality of' means at least two unless otherwise specifically stated.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitations on embodiments of this application.

In the description of the embodiments of this application, unless otherwise specified and defined explicitly, the technical terms "mounting", "connection", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, or an interaction between two elements. Persons of ordinary skill in the art can understand specific meanings of these terms in the embodiments of this application as suitable to specific situations.

Protective sleeves are widely used in the fields such as batteries, electronics, and mechanical equipment, and sleeve surfaces of pipelines, such as surfaces of pipelines or cables. This can meet the protection requirements of pipelines, such as mechanical protection, electromagnetic protection, and fire protection.

Rechargeable batteries, also known as secondary batteries, are batteries that can be charged after being discharged to activate active substances for continuous use. In some related technologies, a rechargeable battery (battery for short in this specification) mainly structurally includes a plurality of battery modules connected in series and/or in parallel, a battery thermal management system (Battery Thermal Management System, BTMS), a battery management system (Battery Management System, BMS), and related mechanical structures (such as a pressure relief mechanism, a bottom protective plate, a frame, and a top cover). A battery module includes a plurality of battery cells connected in series and/or in parallel. A battery cell is the smallest unit that provides an energy source in a battery. In some other related technologies, the battery may alternatively not include battery modules, but include a plurality of battery cells connected in series and/or in parallel. The battery thermal management system is used to maintain the battery operating within an appropriate temperature range to ensure the performance, safety, and service life of the battery. The battery management system is used to manage the charging and discharging of the battery to ensure the safe and stable operation of the battery.

In some related technologies, the battery thermal management system adopts a liquid cooling solution that takes away the heat of the battery through the coolant in the coolant circulation loop, thereby enabling the battery to operate within an appropriate temperature range. The pipeline may be, for example, a coolant pipeline in the coolant circulation loop. The protective sleeve sleeves the coolant pipeline to prevent damage on the coolant pipeline in the case of thermal runaway in the battery. The thermal runaway is caused by the fact that a large amount of heat accumulates due to a much higher heat generation rate than a heat dissipation rate in the battery and cannot be dissipated out of the battery in a timely manner.

The applicant of this application has noticed that since the pipeline is typically designed as a bent shape to match the product structure, some protective sleeves in the related technologies are not easy to install on and remove from the pipeline, which leads to low efficiency in production and assembly.

In view of the above technical problems, the applicant, after in-depth research, has provided a protective sleeve, a battery thermal management system, and a battery to improve the convenience of installing and removing the protective sleeve on the pipeline.

In the solutions of the embodiments of this application, a sleeve body of the protective sleeve includes a first bundling section, a first diameter-variable section, a protective section, a second diameter-variable section, and a second bundling section arranged in sequence. The elasticity of the two bundling sections is utilized to easily implement the installation and removal of the protective sleeve on the pipeline, which is conducive to improving the efficiency of production and assembly.

The protective sleeve in the embodiments of this application can be used for pipeline protection of products in various fields such as batteries, electronics, and mechanical equipment, where the pipeline may be a cable, an optical cable, a fluid pipeline, or the like, which is not specifically limited in this disclosure.

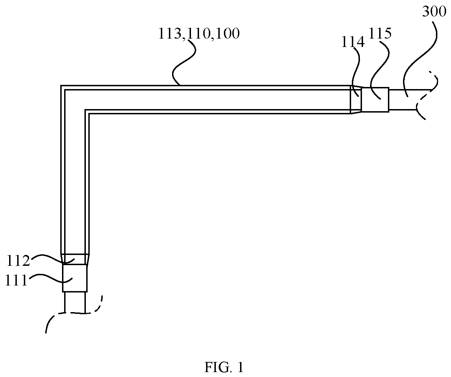

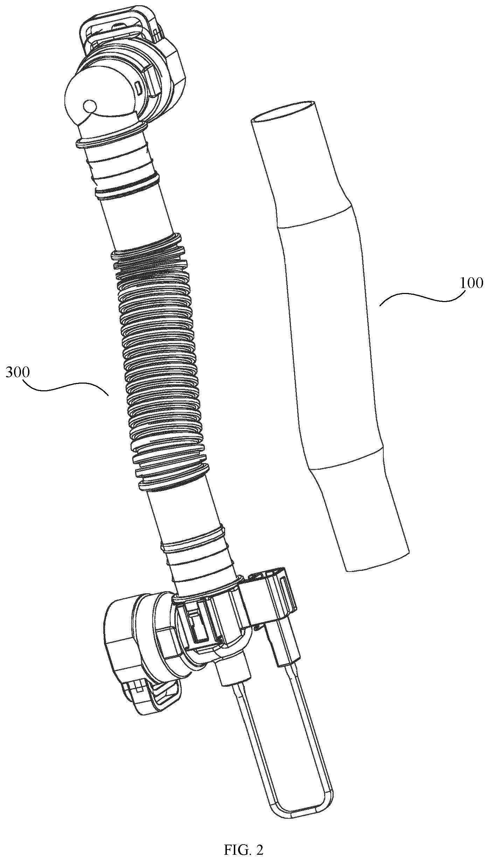

As shown in FIG. 1, FIG. 2, and FIG. 3, the protective sleeve 100 provided in some embodiments of this application is configured to sleeve a pipeline 300. The protective sleeve 100 includes a sleeve body 110, where the sleeve body 110 includes a first bundling section 111, a first diameter-variable section 112, a protective section 113, a second diameter-variable section 114, and a second bundling section 115 arranged in sequence. Diameters of the first bundling section 111 and the second bundling section 115 are smaller than diameter of the protective section 113, and the first bundling section 111 and the second bundling section 115 are capable of elastically clamping the pipeline 300, so as to fix the protective sleeve 100 to the pipeline 300.

The sleeve body 110 is a basic structure of the protective sleeve 100. The protective sleeve 100 may include only the sleeve body 110 that can provide mechanical protection for the pipeline 300 by wrapping it.

Depending on specific application scenarios of the protective sleeve 100, the protective sleeve 100 may further include one or more functional layers. The functional layer may be, for example, a fire protection layer, a heat insulation layer, a thermal conductivity layer, a mechanical performance enhancement layer, an electromagnetic shielding layer, an insulation layer, and the like. This is not specifically limited in this disclosure.

For example, in some embodiments, the protective sleeve 100 is applied to a battery thermal management system of a battery, and is configured to sleeve a pipeline of a coolant circulation loop, that is, sleeving the coolant pipeline. The protective sleeve 100 further includes a fire protection layer, which can provide fire protection for the coolant pipeline, preventing damage to the coolant pipeline caused by thermal runaway of the battery. According to actual needs, a plurality of protective sleeves 100 of the embodiments of this application can be disposed on the coolant circulation loop, thereby providing more comprehensive protection for the coolant circulation loop.

In the embodiments of this application, the sleeve body 110 includes the first bundling section 111, the first diameter-variable section 112, the protective section 113, the second diameter-variable section 114, and the second bundling section 115 arranged in sequence. The first bundling section 111 and the second bundling section 115 have elasticity, and diameters of the first bundling section 111 and the second bundling section 115 are smaller than diameter of the pipeline 300, so that the two bundling sections can elastically clamp the pipeline 300, allowing the protective sleeve 100 to be fixed to the pipeline 300. The protective section 113 is a part that mainly plays a protective role in the protective sleeve 100, and a length of the protective section 113 can be designed according to needs. To facilitate installation, the diameter of the protective section 113 can be slightly greater than the diameter of the pipeline 300, thereby forming a gap fit between the protective segment 113 and the pipeline 300. The first diameter-variable section 112 serves as a structural transition between the first bundling section 111 and the protective section 113, and the diameter of the first diameter-variable section 112 gradually increases along a direction leaving the first bundling section 111. Similarly, the second diameter-variable section 114 serves as a structural transition between the second bundling section 115 and the protective section 113, and the diameter of the second diameter-variable section 114 gradually increases along a direction leaving the second bundling section 115.

In the embodiments of this application, the diameter may be understood as a nominal diameter. The nominal diameter refers to a standardized diameter of containers, pipelines, and their accessories. The use of nominal diameter is conducive to standardization of parts and facilitating design, manufacturing, repair, and management, reducing manufacturing costs.

As shown in FIG. 1, taking the pipeline 300 of the coolant circulation loop as an example, one or more protective sleeves 100 can be used according to actual needs, and the protective sleeve 100 can be bent correspondingly based on the shape of the pipeline 300. When the protective sleeve 100 needs to be installed on the pipeline 300, the protective sleeve 100 is fitted around the pipeline 300 and moved to an appropriate position. The two bundling sections elastically clamp the surface of the pipeline 300, so that the protective sleeve 100 can be reliably fixed on the pipeline 300 with no need to use straps, tapes, or the like for wrapping and fixation subsequently. When the protective sleeve 100 needs to be removed from the pipeline 300, the protective sleeve 100 is moved off the pipeline 300 by overcoming an elastic clamping force of the two bundling sections on the pipeline 300. According to the embodiments of this application, installation and removal of the protective sleeve 100 on the pipeline 300 can be implemented with ease.

In the embodiments of this application, the material of the sleeve body 110 is not limited and can be designed according to the specific application scenarios of the protective sleeve 100. For example, the sleeve body 110 may be a rubber material or a plastic material. In some embodiments, the sleeve body 110 is selected to be woven from fiber, and features high impact resistance, good flexibility, corrosion resistance, light weight, and durability.

In some embodiments of this application, the first bundling section 111 and the second bundling section 115 are selected to be woven from elastic fiber, so that they have good elasticity and can be securely clamped to the surface of the pipeline 300. Elastic fiber is not limited to a specific type, for example, may include at least one of polyester fiber or nylon fiber. Polyester fiber may be, for example, polyethylene terephthalate (PET) fiber, polybutylene terephthalate (PBT) fiber, or polyarylate fiber. Nylon fiber typically refers to polyamide fiber.

In some embodiments, the protective section 113 mainly plays a role of fire protection. The protective section 113 is woven from inorganic fiber and has a certain degree of flexibility. The inorganic fiber is a chemical fiber made from mineral materials. The main varieties include glass fiber, quartz glass fiber, boron fiber, ceramic fiber, metal fiber, and the like, featuring good heat resistance, moisture resistance, fire resistance, and chemical corrosion resistance. Compared with the elastic fiber, inorganic fiber has significantly reduced elasticity. The specific material type of inorganic fiber is not specifically limited in this application. For example, in some embodiments inorganic fiber includes at least one of glass fiber or ceramic fiber.

In some embodiments of this application, the first diameter-variable section 112 and the second diameter-variable section 114 are woven from a mixture of elastic fiber and inorganic fiber. For example, threads of elastic fiber and inorganic fiber can be twisted together and then woven. The elastic fiber and the inorganic fiber can be selected with reference to the foregoing materials. Since the diameter-variable section mainly serves as a structural transition between the bundling section and the protective section 113, there is no need for the diameter-variable section to be fully attached to the pipeline 300. Therefore, the elasticity of the diameter-variable section can be between the elasticity of the bundling section and the protective section 113.

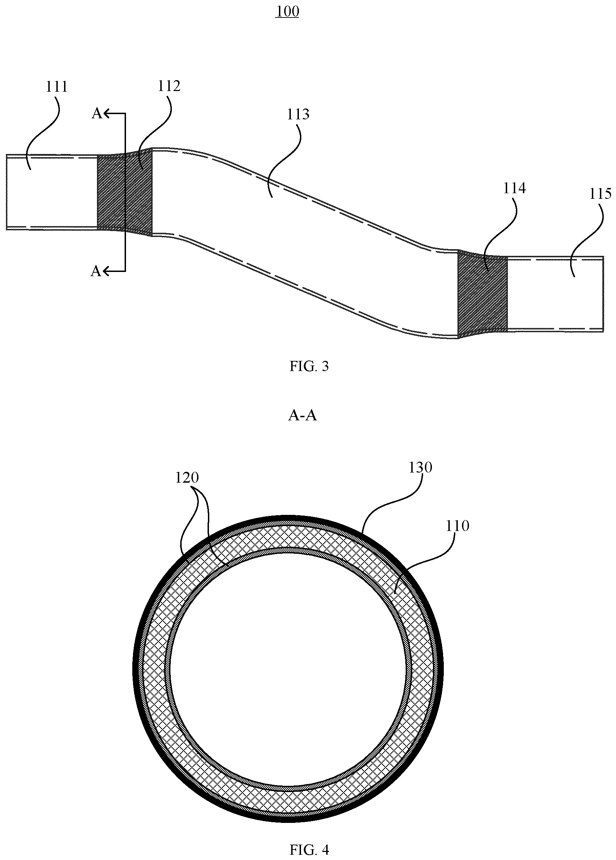

As shown in FIG. 4, in some embodiments of this application, the protective sleeve 100 further includes a mechanical performance enhancement layer 120, where the mechanical performance enhancement layer 120 is disposed at least in the first diameter-variable section 112 and the second diameter-variable section 114.

The mechanical performance enhancement layer 120 can enhance the mechanical performances of the first diameter-variable section 112 and the second diameter-variable section 114, making an overall structure of the protective sleeve 100 stronger and more reliable. The mechanical performance refers to the mechanical characteristics exhibited by a material under various external loads (such as tension, compression, bending, torsion, impact, friction, and alternating stress) in different environments (such as temperature, medium, and humidity). In some embodiments of this application, the mechanical performance enhancement layer 120 includes at least one of rubber or resin, and can effectively improve the wear resistance grade and structural strength of the first diameter-variable section 112 and the second diameter-variable section 114, reducing material wear and powder loss. The rubber selected for the mechanical performance enhancement layer 120 may be silicone rubber or reinforced rubber doped with inorganic powder.

As shown in FIG. 4, in some embodiments, the protective sleeve 100 may include a plurality of mechanical performance enhancement layers 120, where the plurality of mechanical performance enhancement layers 120 are located on an inner side and/or an outer side of the sleeve body 110. For example, the mechanical performance enhancement layer 120 may be a coating layer formed through a coating process.

In some embodiments, to further improve the wear resistance grade and structural strength of the protective sleeve 100, coating can be repeated several times to increase the thickness of the mechanical performance enhancement layer 120. In some embodiments, to further improve the wear resistance grade and structural strength of the protective sleeve 100, a plurality of mechanical performance enhancement layers 120 can be disposed on one or two sides of the sleeve body 110. In addition, materials of the plurality of mechanical performance enhancement layers 120 may be different.

The mechanical performance enhancement layer 120 may be disposed only in the first diameter-variable section 112 and the second diameter-variable section 114. In some other embodiments of this application, the mechanical performance enhancement layer 120 is disposed in the first diameter-variable section 112, the second diameter-variable section 114, the first bundling section 111, the second bundling section 115, and the protective section 113, that is, disposed along an extending direction of the entire sleeve body 110. In this way, the process difficulty can be reduced, which is conducive to reducing production costs.

In some embodiments of this application, the protective sleeve 100 mainly has mechanical protection and fire protection functions. As shown in FIG. 4, the protective sleeve 100 is provided with a fire protection layer 130 on the outer surface. The inorganic fiber material selected for the protective section 113 already has good fire resistance. The provision of the fire protection layer 130 on the surface of the protective sleeve 100 can further improve the fire resistance of the protective sleeve 100, and can provide certain mechanical protection and fire protection for the bundling section and the diameter-variable section. The fire protection layer 130 may include at least one of fire-resistant mica and ceramicized silicone rubber, and may be a coating layer formed through a coating process.

An embodiment of this application further provides a battery thermal management system including a coolant circulation loop and the protective sleeve 100 according to any one of the foregoing embodiments fixed to a pipeline 300 (referring to FIG. 1) of the coolant circulation loop. One or more protective sleeves 100 can be selected according to actual needs, and the protective sleeve 100 can be bent correspondingly based on the shape of the pipeline 300.

The battery thermal management system of this embodiment adopts a liquid cooling solution that takes away the heat of the battery through the coolant in the coolant circulation loop, enabling the battery to operate within a suitable temperature range. The pipeline 300 of the coolant circulation loop refers to the coolant pipeline, that is, a fluid pipeline in which the coolant flows. The protective sleeve 100 is configured to provide mechanical protection and fire protection for the pipeline 300 of the coolant circulation loop. The protective sleeve 100 can be conveniently installed to and removed from the pipeline 300, thus significantly improving the efficiency of battery production and assembly.

An embodiment of this application further provides a battery including the battery thermal management system according to the foregoing embodiment. Since the protective sleeve 100 can be conveniently installed to and removed from the pipeline 300, the efficiency of battery production and assembly is significantly improved. The battery may be a power battery or an energy storage battery used in various electric apparatuses.

As shown in FIG. 1 to FIG. 4, the protective sleeve 100 provided in some embodiments of this application is used in the battery thermal management system of the battery, and is configured to sleeve the pipeline 300 of the coolant circulation loop. This protective sleeve 100 includes a sleeve body 110 and a plurality of mechanical performance enhancement layers 120, and the protective sleeve 100 is provided with a fire protection layer 130 on an outer surface. The sleeve body 110 includes a first bundling section 111, a first diameter-variable section 112, a protective section 113, a second diameter-variable section 114, and a second bundling section 115 arranged in sequence. Diameters of the first bundling section 111 and the second bundling section 115 are smaller than diameter of the protective section 113, and the first bundling section 111 and the second bundling section 115 are capable of elastically clamping the pipeline 300, so as to fix the protective sleeve 100 to the pipeline 300. The first bundling section 111 and the second bundling section 115 are woven from elastic fiber, the protective section 113 is woven from inorganic fiber, and the first diameter-variable section 112 and the second diameter-variable section 114 are woven from a mixture of elastic fiber and inorganic fiber. The elastic fiber includes at least one of polyester fiber or nylon fiber, and the inorganic fiber includes at least one of glass fiber or ceramic fiber. The mechanical performance enhancement layer 120 is disposed at least in the first diameter-variable section 112 and the second diameter-variable section 114. To simplify the production process, the mechanical performance enhancement layer 120 can also be disposed in the first bundling section 111, the second bundling section 115, and the protective section 113. The plurality of mechanical performance enhancement layers 120 are located on an inner side and an outer side of the sleeve body 110, and may be coating layers formed through the coating processes. The mechanical performance enhancement layer 120 may include at least one of rubber or resin. The fire protection layer 130 includes at least one of fire-resistant mica and ceramicized silicone rubber.

The protective sleeve 100 of this embodiment can provide mechanical protection and fire protection for the pipeline 300 of the coolant circulation loop in the case of thermal runaway in the battery, preventing the pipeline 300 from rupturing due to thermal deformation and causing coolant leakage. When the protective sleeve 100 needs to be installed on the pipeline 300, the protective sleeve 100 is fitted around the pipeline 300 and moved to an appropriate position. The two bundling sections can be elastically clamped on the surface of the pipeline 300, so that the protective sleeve 100 can be reliably fixed on the pipeline 300 through static friction, with no need to use straps, tapes, or the like for wrapping and fixation subsequently. When the protective sleeve 100 needs to be removed from the pipeline 300, the protective sleeve 100 is moved off the pipeline 300 by overcoming an elastic clamping force of the two bundling sections on the pipeline 300. The protective sleeve 100 of this embodiment not only provides good mechanical protection and fire protection for the pipeline 300, but also facilitates installation and removal operations on the pipeline 300, significantly improving the efficiency of battery production and assembly.

In conclusion, it should be noted that the above embodiments are merely intended for describing the technical solutions of this application but not for limiting this application. Although this application is described in detail with reference to the foregoing embodiments, persons of ordinary skill in the art should understand that they may still make modifications to the technical solutions described in the foregoing embodiments or make equivalent replacements to some or all technical features thereof without departing from the scope of the technical solutions of the embodiments of this application. They should all be covered in the scope of the claims and specification of this application. In particular, as long as there is no structural conflict, the various technical features mentioned in the embodiments can be combined in any manner. This application is not limited to the specific embodiments disclosed in this specification but includes all technical solutions falling in the scope of the claims.

## Claims

1. A protective sleeve, configured to sleeve a pipeline, wherein the protective sleeve comprises a sleeve body, wherein the sleeve body comprises a first bundling section, a first diameter-variable section, a protective section, a second diameter-variable section, and a second bundling section arranged in sequence, wherein
diameters of the first bundling section and the second bundling section are smaller than diameter of the protective section, and the first bundling section and the second bundling section are capable of elastically clamping the pipeline, so as to fix the protective sleeve to the pipeline.

2. The protective sleeve according to claim 1, wherein the sleeve body is woven from fiber.

3. The protective sleeve according to claim 1 or 2, wherein the first bundling section and the second bundling section are woven from elastic fiber.

4. The protective sleeve according to any one of claims 1 to 3, wherein the protective section is woven from inorganic fiber.

5. The protective sleeve according to any one of claims 1 to 4, wherein the first diameter-variable section and the second diameter-variable section are woven from a mixture of elastic fiber and inorganic fiber.

6. The protective sleeve according to claim 5, wherein
the elastic fiber comprises at least one of polyester fiber or nylon fiber; and/or
the inorganic fiber comprises at least one of glass fiber or ceramic fiber.

7. The protective sleeve according to any one of claims 1 to 6, wherein the protective sleeve further comprises a mechanical performance enhancement layer, wherein the mechanical performance enhancement layer is disposed at least in the first diameter-variable section and the second diameter-variable section.

8. The protective sleeve according to claim 7, wherein the mechanical performance enhancement layer is further disposed in the first bundling section, the second bundling section, and the protective section.

9. The protective sleeve according to claim 7 or 8, wherein the protective sleeve comprises a plurality of mechanical performance enhancement layers, wherein the plurality of mechanical performance enhancement layers are located on an inner side and/or an outer side of the sleeve body.

10. The protective sleeve according to any one of claims 7 to 9, wherein
the mechanical performance enhancement layer comprises at least one of rubber or resin; and/or
the mechanical performance enhancement layer is a coating layer.

11. The protective sleeve according to any one of claims 1 to 10, wherein the protective sleeve is provided with a fire protection layer on an outer surface.

12. The protective sleeve according to claim 11, wherein the fire protection layer comprises at least one of fire-resistant mica and ceramicized silicone rubber.

13. A battery thermal management system, comprising a coolant circulation loop and the protective sleeve according to any one of claims 1 to 12 fixed to a pipeline of the coolant circulation loop.

14. A battery, comprising the battery thermal management system according to claim 13.
